# EUROPEAN PATENT APPLICATION

(11) **EP 3 733 445 A1**
(43) Date of publication of application: **04.11.2020**
(21) Application number: 19172059.8
(22) Date of filing: 30.04.2019
(51) Int. Cl.: B60N 2/07, B60N 2/08

(54) **AUTOMOTIVE SEAT RAIL**

(71) Applicant: Hsin Chong Machinery Works Co. Ltd., Taoyuan City 335 (TW); Fuzhou Mingfang Automobile Parts Industry Co Ltd., Fuzhou (CN)
(72) Inventor: HSI, Jeffrey Chung-Chiang, 335 Taoyuan City (TW); LEE, Yu Ching, 335 Taoyuan City (TW); GAO, Jie, 335 Taoyuan City (TW); XIE, Jin Zhou, 335 Taoyuan City (TW); LIN, Xing He, 335 Taoyuan City (TW)
(74) Representative: 2K Patentanwälte Blasberg Kewitz & Reichel

(57) **Abstract**

An automotive seat rail includes a rail (100) and an engaging structure (400). The engaging structure (400) includes a fixing frame (41), an engaging member (42) and an elastic member (43). The fixing frame (41) includes a fixing portion (411) and an abutting portion (412) fixed to and abutting an inner rail (2) respectively. The engaging member (42) includes an engaging section (422), a base section (421), and a stress section (424). The base section (421) is pivotally coupled to the fixing frame (41), and the engaging section (422) is engaged between the inner and outer rails (2), (1). When the stress section (424) is controlled by an external force, the engaging section (422) is released, so as to ensure the accurate action of the engaging structure (400) and allow the engaging member (42) to have better structural strength, smoother control, and more accurate engagement and disengagement effects.

## Description

### BACKGROUND OF THE INVENTION

### 1. Technical Field

The technical field relates to a seat rail, and more particularly to an automotive seat rail.

### 2. Description of Related Art

In general, a seat rail is mainly provided for users to adjust the position of a seat. For example, an automotive seat rail allows the users to adjust the front and rear positions of a seat with respect to a car body.

Each seat rail includes two rails, and each rail includes an outer rail fixed to the car body and an inner rail fixed to the seat, and the inner rail is slidably coupled to the outer rail. The rail has a locking device (such as an engaging member) capable of controlling the engagement or disengagement between the inner rail and the outer rail. Each seat rail controls the engagement or disengagement between the inner and outer rails by pulling a trigger.

However, the conventional locking device is just provided for fixing the rail only, but it provides no other structure for strengthening the fixing strength. The fixation of the locking device may be deviated easily by the pulling force of the trigger, and the whole locking device or the engagement member in the locking device cannot carry out an action accurately and thus resulting in poor control.

Further, an actuated arm of the locking device actuated by the trigger is simply an arm only, but it does not come with any design to strengthen the structural strength, so that the actuated arm may be deformed easily. Obviously, the smoothness of the control and the accuracy of the engagement and disengagement of the conventional seat rail require improvements.

In view of the aforementioned drawbacks of the prior art, the discloser of this disclosure based on years of experience in the related industry to conduct extensive research and experiment, and finally provided a feasible solution as disclosed in this disclosure to overcome the drawbacks of the prior art.

### SUMMARY OF THE INVENTION

Therefore, it is a primary object of this disclosure to overcome the drawbacks of the prior art by providing an automotive seat rail capable of ensuring an accurate action of the engaging structure without causing poor control, and also capable of allowing an engaging member of an engaging structure to have better structural strength, smoother control, and more accurate engagement and disengagement effects.

To achieve the aforementioned and other objectives, this disclosure discloses an embodiment of an automotive seat rail comprising a rail and an engaging structure. The rail includes an inner rail and an outer rail slidably coupled to each other; and the engaging structure includes a fixing frame, an engaging member and a first elastic member. The first elastic member is elastically supported between the fixing frame and the engaging member; the fixing frame includes a fixing portion and an abutting portion, and the fixing portion is fixed to the inner rail, and the abutting portion extends from the fixing portion and abuts a side of the inner rail; the engaging member includes a base section, an engaging section, an arm section and a stress section, and the base section is pivotally coupled to the fixing frame, and the engaging section is extended from an end of the base section and engaged between the inner rail and the outer rail, and the arm section bends and extends from the other end of the base section and forms a free end at the end point of the extension, and the stress section bends and extends from the free end of the arm section. Wherein, when the stress section is controlled by the external force, the stress section drives the engaging section to release the engagement between the inner rail and the outer rail accordingly.

Compared with the prior art, this disclosure has the following effects: An accurate operation of the engaging structure can be ensured, and poor control will not happen. In addition, this disclosure allows an engaging member of an engaging structure to have better structural strength, smoother control, and more accurate engagement and disengagement effects.

### BRIEF DESCRIPTION OF THE DRAWINGS

FIG. 1 is a perspective view of a seat rail in accordance with a first embodiment of this disclosure;
FIG. 2 is a partial blowup view of the seat rail as depicted in FIG. 1;
FIG. 3 is an exploded view of a seat rail in accordance with the first embodiment of this disclosure;
FIG. 4 is a cross-sectional view of seat rail in accordance with the first embodiment of this disclosure after being engaged;
FIG. 5 is a cross-sectional view of an inner rail and an outer rail seat rail as disclosed in FIG. 4;
FIG. 6 is a cross-sectional view of a seat rail in accordance with the first embodiment of this disclosure after being disengaged;
FIG. 7 is a top cross-sectional view of a seat rail in accordance with the first embodiment of this disclosure;
FIG. 8 is a partial exploded view of a seat rail in accordance with a second embodiment of this disclosure;
FIG. 9 is a perspective view of an actuating structure as depicted in FIG. 8 after being assembled;
FIG. 10 is a cross-sectional view of an actuating structure as depicted in FIG. 8 after being assembled;
FIG. 11 is a side view of a seat rail in accordance with the second embodiment of this disclosure after being disengaged; and
FIG. 12 is a side view of a control lever and an actuating frame of a seat rail in accordance with the second embodiment of this disclosure in a malfunction.

### DESCRIPTION OF THE PREFERRED EMBODIMENTS

The technical contents of this disclosure will become apparent with the detailed description of preferred embodiments accompanied with the illustration of related drawings as follows. It is intended that the embodiments and drawings disclosed herein are to be considered illustrative rather than restrictive.

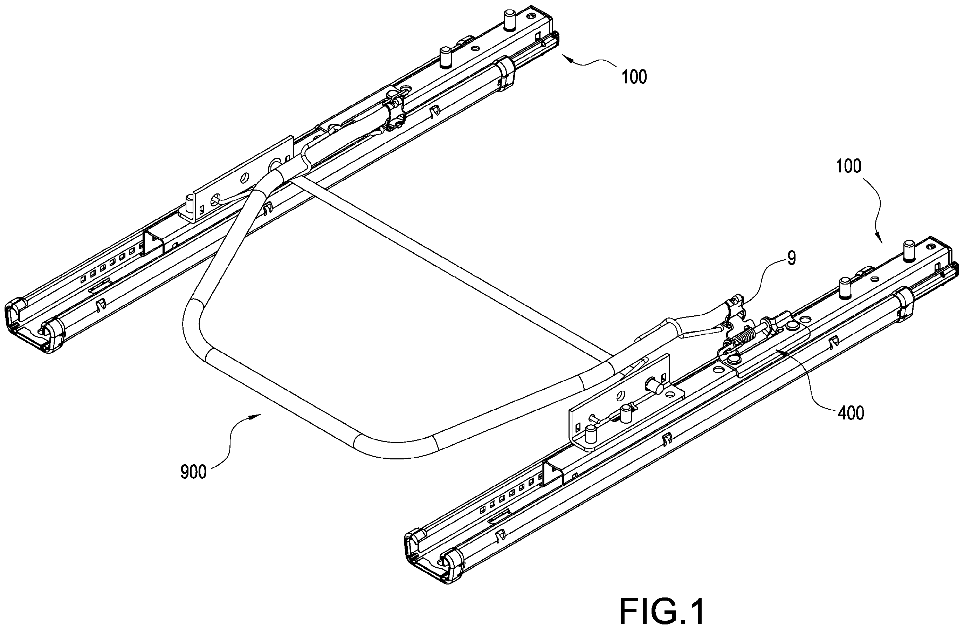

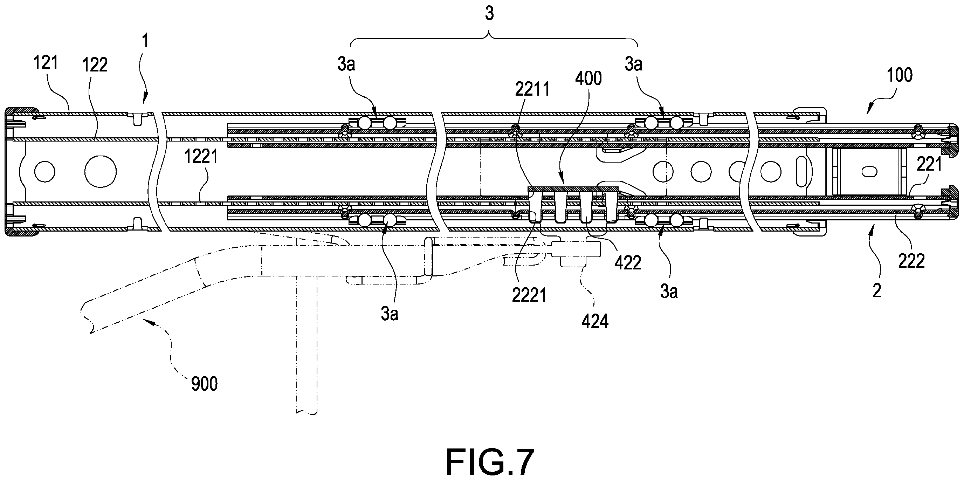

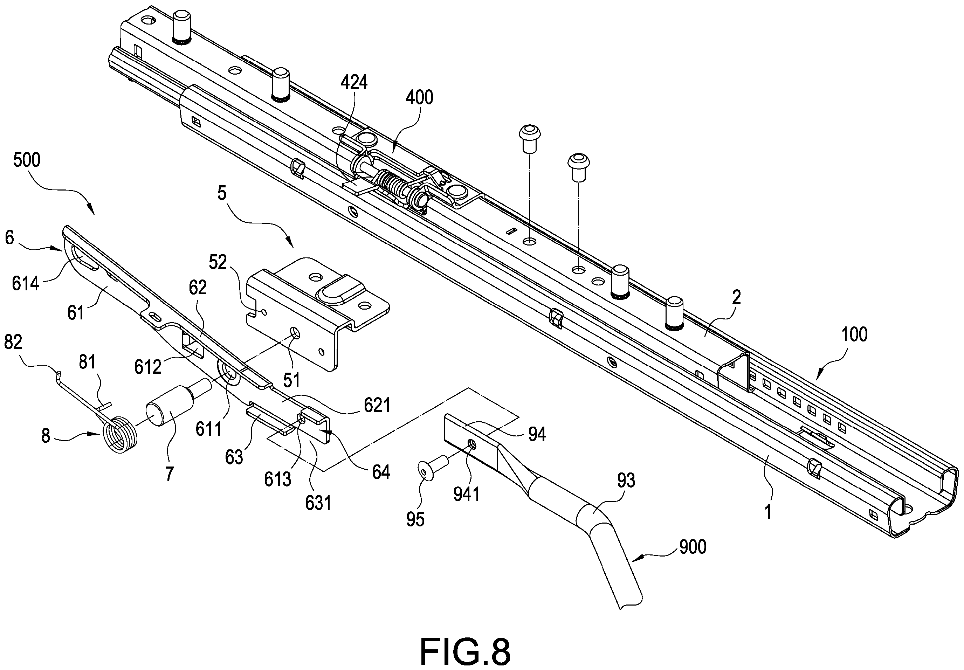

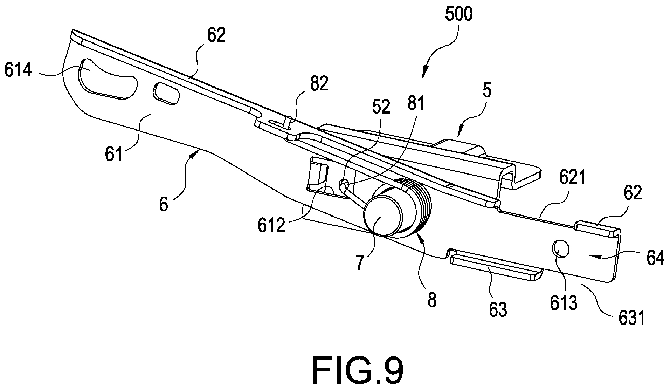

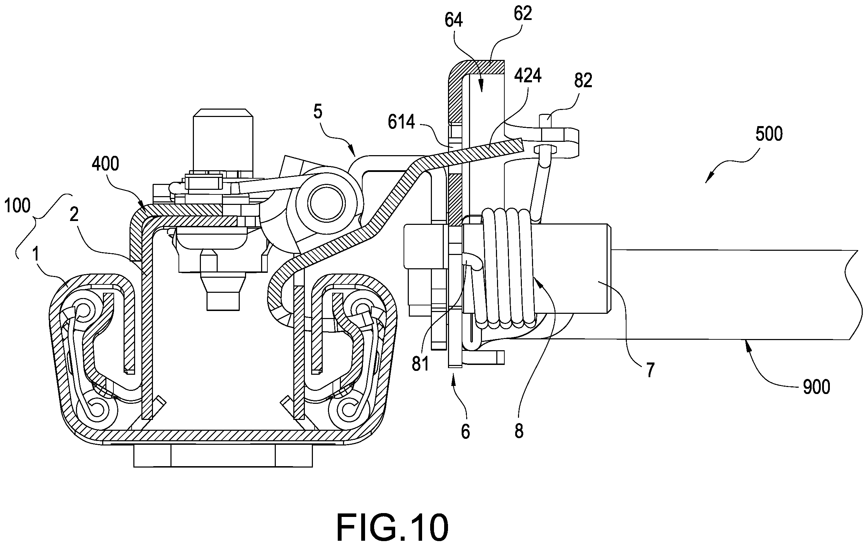

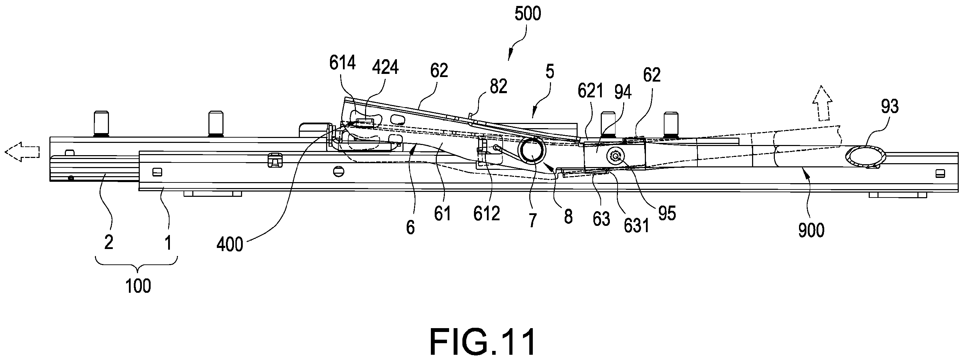

With reference to FIGS. 1 to 7 for an automotive seat rail in accordance with the first embodiment of this disclosure and FIGS. 8 to 12 for an automotive seat rail in accordance with the second embodiment of this disclosure, the seat rail of the first embodiment of this disclosure comprises two rails 100, an engaging structure 400 and a control lever 900.

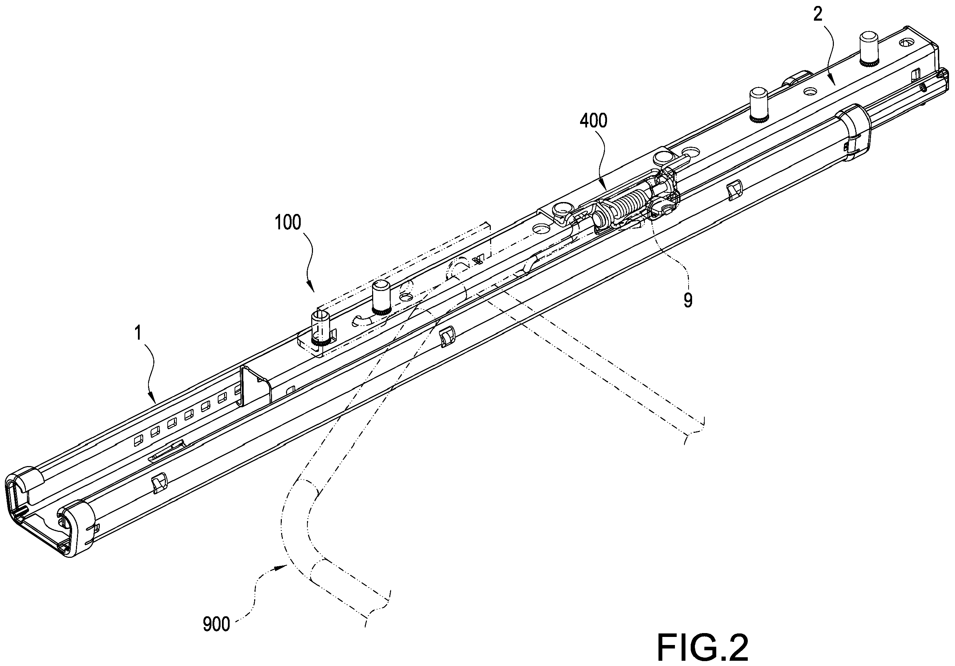

In the first embodiment of this disclosure as shown in FIGS. 1 and 2, the rail 100 is fixed between a seat (not shown in the figure) and a car body (not shown in the figure), and the control lever 900 is spanned between the two rails 100 for controlling the engaging structure 400. The seat rail of this disclosure is applicable to various seats, and this embodiment uses an automotive seat for the illustration.

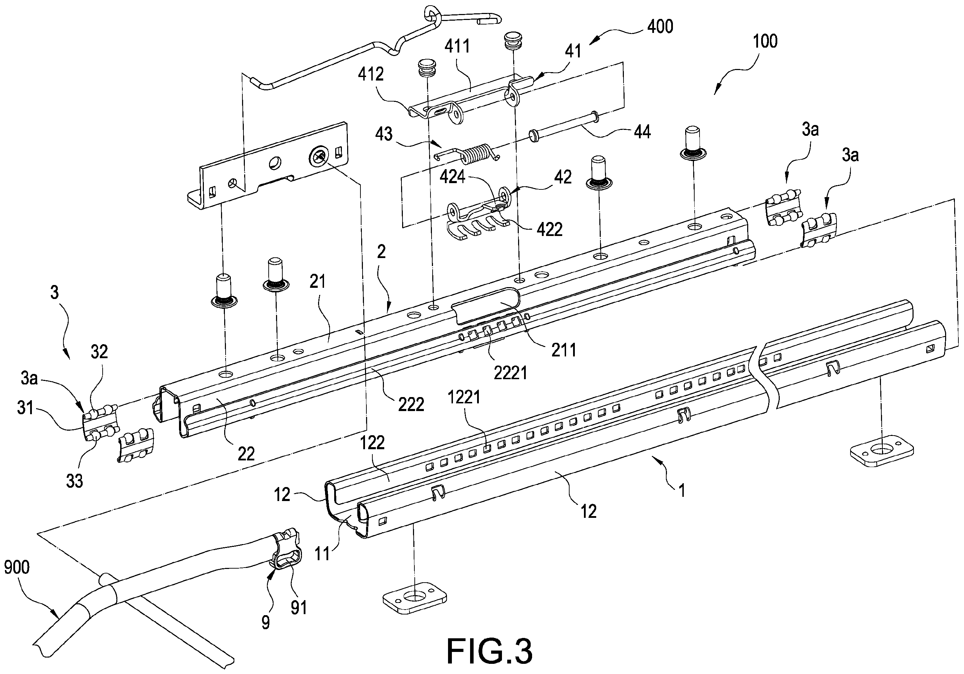

With reference to FIGS. 3 to 5, each rail 100 includes an outer rail 1, an inner rail 2 and a ball structure 3 (as shown in FIG. 3). Wherein, the outer rail 1 is fixed to the car body (not shown in the figure), and the inner rail 2 is slidably coupled to the outer rail 1, and the ball structure 3 is installed between the outer rail 1 and the inner rail 2, and the seat (not shown in the figure) is fixed onto the inner rail 2.

The outer rail 1 has a bottom plate 11 and two first side plates 12 erected from two opposite sides of the bottom plate 11 respectively; and the inner rail 2 has a top plate 21 and two second side plates 22 erected from two opposite sides of the top plate 21 respectively.

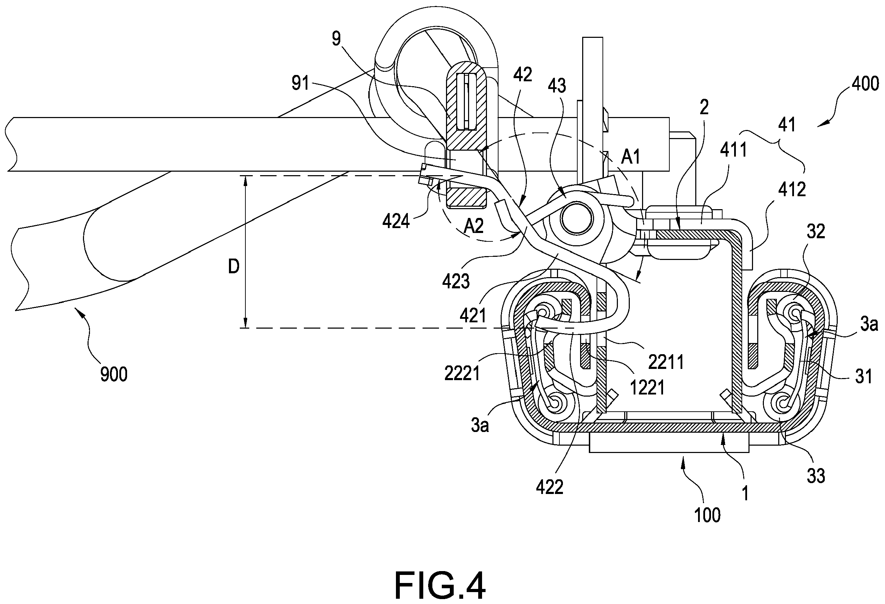

The first side plate 12 includes a first side plate body 121 and an inwardly folded plate 122, and the first side plate body 121 is erected from one of the opposite sides of the bottom plate 11, and the inwardly folded plate 122 extends from the upper edge of the first side plate body 121 and passes through a plurality of turns and is arranged with an interval apart from another inwardly folded plate 122 and adjacent to the first side plate body 121, and the two inwardly folded plates 122 pass through the turns and approach with each other. The second side plate 22 includes a second side plate body 221 and an outwardly folded plate 222, and the second side plate body 221 is erected from one of the opposite sides of the top plate 21, and the outwardly folded plate 222 extends from a lower edge of the second side plate body 221 and passes a plurality of turns and is arranged with an interval apart from another outwardly folded plate 222 and adjacent to the second side plate body 221, and the two outwardly folded plates 222 are bent away from each other. Therefore, each outwardly folded plate 222 of the inner rail 2 is extended between each first side plate body 121 and each inwardly folded plate 122 of the outer rail 1, and each outwardly folded plate 222 is slidably coupled to each first side plate 12 through the ball structure 3 (as shown in FIG. 4).

Wherein, a first arcuate bent portion 123 is coupled between the first side plate body 121 and the bottom plate 11, and a second arcuate bent portion 124 is coupled between the first side plate body 121 and the inwardly folded plate 122. An abutting slope 223 is coupled between the second side plate body 221 and the outwardly folded plate 222, and a third arcuate bent portion 224 is formed at a position near an edge portion of the outwardly folded plate 222. Therefore, both of the outer rail 1 and the inner rail 2 have better structural strength and provide a good effect of fixing the ball structure 3 securely (which will be described in details below). In addition, the two first side plates 12 of the outer rail 1 can be expanded with respect to each other. In this embodiment, the distance between the upper ends of the two first side plate bodies 121 is wider, and tapers towards the lower ends, so that the ball structure 3 fixed between the outwardly folded plate 222 and the first side plate 12 is tilted slightly to improve the secured fixing effect of the ball structure 3.

In FIGS. 3 and 4, the ball structure 3 is configured and supported between the outer rail 1 and the inner rail 2. The ball structure 3 includes a plurality of ball modules 3a, and each ball module 3a includes a support body 31 and pivotally coupled to an upper-row ball 32 and a lower-row ball 33 of the support body 31. Both of the upper-row ball 32 and the lower-row ball 33 have a plurality of balls (not labelled in the figure) arranged serially with an interval apart from one another.

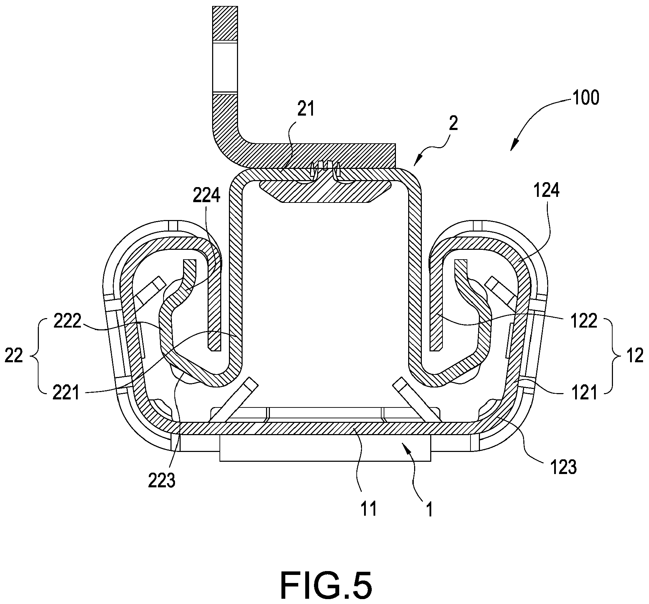

In FIGS. 4 and 5, the upper-row ball 32 of each ball module 3a is disposed and clamped between each second arcuate bent portion 124 and each respective third arcuate bent portion 224, and the lower-row ball 33 of each ball module 3a is disposed and clamped between each first arcuate bent portion 123 and each respective abutting slope 223. Since each second arcuate bent portion 124 and each third arcuate bent portion 224 are configured to be corresponsive to each other to form a cylindrical chamber, and each first arcuate bent portion 123 and each respective abutting slope 223 are configured to be corresponsive to each other to form another cylindrical chamber with a straight side, so that the upper-row ball 32 and the lower-row ball 33 of the ball module 3a can be fixed between the outer rail 1 and the inner rail 2 securely. Since each ball module 3a has at least four balls (two at the upper row and two at the lower row), so that the outer rail 1 and the inner rail 2 can slide smoothly without producing abnormal sound.

Before being driven, the engaging structure 400 is engaged between the outer rail 1 and the inner rail 2, so that the inner rail 2 cannot slide with respect to the outer rail 1.

The engaging structure 400 includes a fixing frame 41, an engaging member 42 and a first elastic member 43 and preferably includes a first pivot 44. Wherein, the engaging member 42 is pivotally coupled to the fixing frame 41, and the first elastic member 43 is elastically supported between the fixing frame 41 and the engaging member 42.

The fixing frame 41 includes a fixing portion 411 and an abutting portion 412, and the fixing portion 411 is fixed to the top plate 21 of the inner rail 2, and the abutting portion 412 extends from the fixing portion 411 and abuts against a side of the inner rail 2. In this embodiment, the abutting portion 412 abuts against one of the second side plates 22 of the inner rail 2, so that the fixing frame 41 is securely fixed to the inner rail 2 to resist the pulling force coming from the control lever 900, so as to prevent any shifting caused by external forces and ensure the accurate action of the engaging structure 400 without having the situation of poor control.

The engaging member 42 includes a base section 421, an engaging section 422, an arm section 423 and a stress section 424. Wherein, the base section 421 is pivotally coupled to the fixing frame 41 through the first pivot 44, and the engaging section 422 is extended from an end of the base section 421 and engaged between the inner rail 2 and the outer rail 1, and the arm section 423 bends and extends from the other end of the base section 421 and forms a free end at the endpoint of the extension, and the stress section 424 bends and extends from the free end of the arm section 423. The first elastic member 43 is movably sheathed on the first pivot 44.

Wherein, the engaging member 42 is extended and bent with respect to the base section 421 by the arm section 423, and the stress section 424 is extended and bent with respect to the arm section 423, so as to increase the distance D of the plumb line between the stress section 424 and the engaging section 422 (as shown in FIG. 4). Specifically, a first included angle A1 is defined between the arm section 423 and the base section 421, and the arm section 423 is elevated upwardly with respect to the base section 421 due to the first included angle A1; and a second included angle A2 is defined between the stress section 424 and the arm section 423, and the stress section 424 is declined downwardly with respect to the arm section 423 due to the second included angle A2. With the aforementioned structure, the engaging member 42 has better structural strength, smoother control, and more accurate engagement and disengagement effects. In addition, the engaging section 422 is folded backwardly with respect to the base section 421 to form an arcuate inverted hook shape, so that the engaging section 422 is invertedly hooked between the outer rail 1 and the inner rail 2. In FIG. 3, the engaging section 422 further has a plurality of claws (not labelled in the figure) formed thereon, and the engaging member 42 is configured to be corresponsive to an opening 211 of the inner rail 2 to facilitate the operations of engagement and disengagement.

Specifically, the inwardly folded plate 122 of the outer rail 1 has a plurality of first perforations 1221, and the second side plate body 221 and the outwardly folded plate 222 of the inner rail 2 have a plurality of second perforations 2211 and a plurality of third perforations 2221 respectively. In FIG. 4, the first perforation 1221, the second perforation 2211 and the third perforation 2221 are configured to be corresponsive to each other and provided for passing the engaging section 422 through these three perforations to achieve the engagement effect.

In FIGS. 3 and 4, a sheath 9 is disposed at an end of the control lever 900, wherein the sheath 9 is an object which may be made of any material. In this embodiment, the sheath 9 is made of an elastic colloid and has a sheath hole 91 formed thereon. The stress section 424 of the engaging member 42 is a lug extending into the sheath hole 91 and driven by the sheath 9. Therefore, the control lever 900 can drive the stress section 424 through the sheath 9. Since the stress section 424 is sheathed by the sheath 9, therefore the sheath 9 can drive the action of the stress section 424 successfully regardless of the control of being engaged or disengaged.

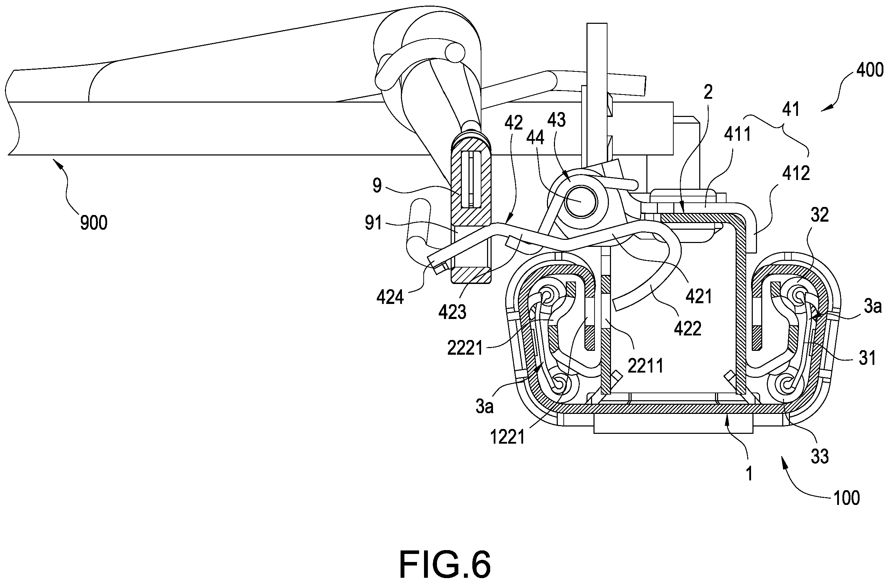

In FIG. 4, when a user has not operated the control lever 900, the engaging member 42 maintains its status of being latched between the inner rail 2 and the outer rail 1 by the engaging section 422 through the elasticity of the first elastic member 43. In FIG. 6, when the user pulls the control lever 900 to drive the stress section 424 to move downwardly, the engaging member 42 is driven at the same time to rotate to an angle by using the first pivot 44 as the axis, so that the engaging section 422 is turned upside down accordingly, and the engaging section 422 is separated from the first perforation 1221, the second perforation 2211 and the third perforation 2221, so as to release the engagement of the outer rail 1 and the inner rail 2.

With reference to FIGS. 8 to 12 for a seat rail in accordance with a second embodiment of this disclosure, the seat rail of this embodiment is substantially the same as that of the first embodiment, except that this second embodiment further comprises an actuating structure 500 and does not have the sheath 9. The actuating structure 500 comprises a base plate 5, an actuating frame 6 and a second elastic member 8, and preferably comprises a second pivot 7.

The base plate 5 is fixed to the inner rail 2; the actuating frame 6 is pivotally coupled to the base plate 5 and has a limit space 64 and a driving portion 614 (such as a spot-facing hole formed on the actuating frame 6 as shown in the figures), and the driving portion 614 is mounted onto the stress section 424 in a surrounding form; the second elastic member 8 is elastically supported between the actuating frame 6 and the base plate 5. The lever body 93 of the control lever 900 has a control end 94 inserted into and limited by the limit space 64, so that the control lever 900 can control the actuating frame 6 to drive the engaging member 42 to be unlocked.

Wherein, the actuating frame 6 further has a frame body 61 and a first protrusion 62 and a second protrusion 63 arranged with an interval apart from each other end extending from both opposite sides of the frame body 61 respectively, and the limit space 64 is formed between the frame body 61, the first protrusion 62 and the second protrusion 63.

The second pivot 7 is fixed to the second perforation 51 of the base plate 5, and the portion between the limit space 64 of the actuating frame 6 and the driving portion 614 is movably and pivotally coupled by the first perforation 611, and the second elastic member 8 is sheathed on the second pivot 7.

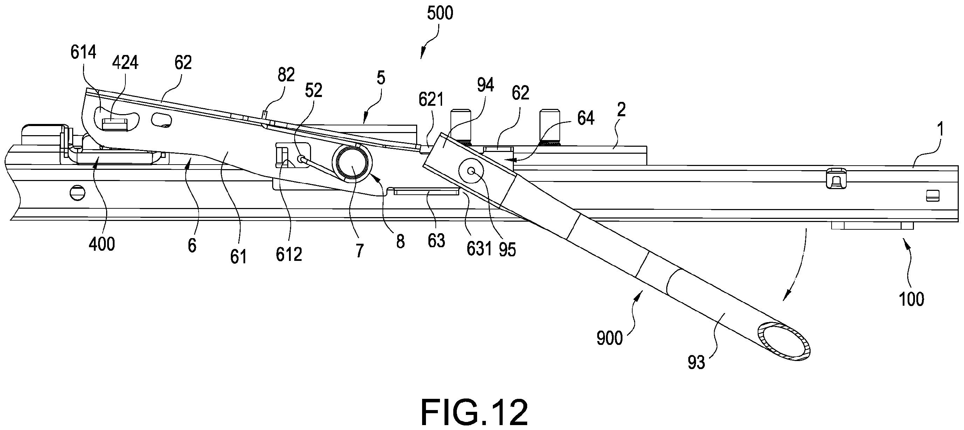

The control end 94 has a second through hole 941 formed thereon, and a first through hole 613 is formed at the position of the limit space 64 corresponding to the actuating frame 6, and the pivotal member 95 pivotally couples the actuating frame 6 and the control end 94 to each other through the first through hole 613 and the second through hole 941, so that the control end 94 can be rotated with respect to the actuating frame 6. The first protrusion 62 and the second protrusion 63 are provided for blocking the rotating direction of the control end 94. In addition, the first protrusion 62 and the second protrusion 63 has a first notch 621 and a second notch 631 formed thereon respectively, and the control end 94 may be rotated to a position corresponding to the first notch 621 and the second notch 631 simultaneously (as shown in FIG. 12).

In addition, the actuating frame 6 and the base plate 5 have an opening 612 and an insert hole 52 formed thereon respectively and configured to be opposite to each other, and an end 81 of the second elastic member 8 is passed through the opening 612 and inserted into the insert hole 52, and the other end 82 of the second elastic member 8 is inserted plugged to the actuating frame 6.

In FIG. 12, when the car body is collided, since the first protrusion 62 and since the second protrusion 63 of the actuating frame 6 have the first notch 621 and the second notch 631 respectively, therefore the control end 94 of a wrongly operated control lever 900 can be maintained in the first notch 621 and the second notch 631 and the engaging member 42 will not be driven wrongly by the actuating frame 6, so as to prevent the occurrence of a wrong disengagement.

In summation of the description above, this disclosure improves over the prior art and has the following effects: The fixing frame 41 has the abutting portion 412 for abutting the inner rail 2, so that the fixing frame 41 can be fixed to the inner rail 2 securely to resist the pulling force of the control lever 900, and the fixing frame 41 will not be shifted by external forces, so as to ensure the accurate action of the engaging structure 400 without the situation of having poor control. In addition, the special structural design of the engaging member 42 allows the engaging member 42 to have better structural strength, smoother control and more accurate engagement and disengagement effects.

In addition, this disclosure also has the following effects: The special structural design of the outer rail 1 and the inner rail 2 provides a good structural strength. Two cylindrical chambers are formed between the outer rail 1 and the inner rail 2 for positioning the upper-row balls 32 and the other two cylindrical chambers with straight edges are provided for positioning the lower-row balls 33, so that the ball module 3a can be positioned between the outer rail 1 and the inner rail 2 securely and will not be shifted easily. The ball module 3a has least four balls (two at the upper row and two at the lower row), so that the outer rail 1 and the inner rail 2 can slide smoothly without producing abnormal sound.

## Claims

1. An automotive seat rail, comprising:
a rail (100), including an inner rail (2) and an outer rail (1) slidably coupled to each other; and
an engaging structure (400), including a fixing frame (41), an engaging member (42), and a first elastic member (43);
the first elastic member (43) being elastically supported between the fixing frame (41) and the engaging member (42);
the fixing frame (41) including a fixing portion (411) and an abutting portion (412), and the fixing portion being fixed to the inner rail (2), and the abutting portion (412) extending from the fixing portion (411) and abutting against a side of the inner rail (2);
the engaging member (42) including a base section (421), an engaging section (422), an arm section (423) and a stress section (424), and the base section (421) being pivotally coupled to the fixing frame (41), and the engaging section (422) extending from an end of the base section (421) and engaged between the inner rail (2) and the outer rail (1), and the arm section 423) bending and extending from the other end of the base section (421) and forming a free end (not labelled in the figure) at an endpoint of the extension, and the stress section (424) bending and extending from the free end of the arm section (423);
wherein, if the stress section (424) is controlled by an external force, the engaging section (422) will be driven to release from the engagement between the inner rail (2) and the outer rail (1) accordingly.

2. The automotive seat rail according to claim 1, wherein the arm section (423) is bent and extended with respect to the base section (421) and the stress section (424) is bent and extended with respect to the arm section (423), so that the distance (D) between the stress section (424) and the engaging section (422) of the engaging member (42) is increased along the plumb line.

3. The automotive seat rail according to claim 1, wherein a first included angle (A1) is defined between the arm section (423) and the base section (421), and the arm section (423) is tilted in a direction with respect to the base section (421) by the first included angle (A1), and a second included angle (A2) is defined between the stress section (424) and the arm section (423), and the stress section (424) is tilted in another direction with respect to the arm section (423) by the second included angle (A2), and the direction and the other direction are opposite to each other.

4. The automotive seat rail according to claim 1, wherein the engaging section (422) is folded (or bent) with respect to the base section (421) to form an arcuate inverted hook shape, and the engaging section (422) is invertedly hooked between the inner rail (2) and the outer rail (1).

5. The automotive seat rail according to claim 1, wherein the outer rail (1) has a bottom plate (11) and two first side plates (12) erected from two opposite sides of the bottom plate (11) respectively, and the inner rail (2) has a top plate (21) and two second side plates (22) erected from two opposite sides of the top plate (21) respectively, and the inner rail (2) is slidably coupled to the outer rail (1); the fixing portion (411) of the fixing frame (41) is fixed to the top plate (21) of the inner rail (2), and the abutting portion (412) of the fixing frame (41) abuts against one of the second side plates (22) of the inner rail (2).

6. The automotive seat rail according to claim 5, wherein the rail further comprises a ball structure (3); the outer rail (1) has a bottom plate (11) and two first side plates (12) erected from two opposite sides of the bottom plate (11) respectively, and the inner rail (2) has a top plate (21) and two second side plates (22) erected from two opposite sides of the top plate (21) respectively, and the inner rail (2) is slidably coupled to the outer rail (1); the first side plate (12) of the outer rail (1) includes a first side plate body (121) erected from the opposite sides of the bottom plate (11) and an inwardly folded plate (122) extending from the upper edge of the first side plate body (121), and the inwardly folded plates (122) of the outer rail (1) are bent to approach one another, and the second side plate (22) of the inner rail (2) includes a second side plate body (221) erected from the opposite sides of the top plate (21) and an outwardly folded plate (222) extending from the lower edge of the second side plate body (221), and the outwardly folded plates (222) of the inner rail (2) are bent away from each other, and each outwardly folded plate (222) is extended between each first side plate body (121) and each respective inwardly folded plate (122), and each outwardly folded plate (222) is slidably coupled to each respective first side plate (121) through the ball structure (3).

7. The automotive seat rail according to claim 6, wherein a first arcuate bent portion (123) is coupled between each first side plate body (121) and the bottom plate (11), and a second arcuate bent portion (124) is coupled between each first side plate body (121) and each respective inwardly folded plate (122), and an abutting slope (223) is coupled between each second side plate body (221) and each respective outwardly folded plate (222), and a free end (not labelled in the figure) is formed at a position near the edge of each outwardly folded plate (222), and a third arcuate bent portion (224) is formed at the free end of each outwardly folded plate (222), each first arcuate bent portion (123) and each abutting slope (223) are configured corresponsive to each other and provided for receiving the lower-row balls (33) of the ball structure (3), and each second arcuate bent portion (124) and each third arcuate bent portion (224) are configured corresponsive to each other and provided for receiving the upper-row balls (32) of the ball structure (3); the ball structure (3) comprises a plurality of ball modules (3a), each including a support body (31) and pivoted to the upper-row balls (32) and the lower-row balls (33) of the support body (31), and the upper-row balls of each ball module are disposed between each second arcuate bent portion (124) and each third arcuate bent portion (224) which are corresponsive to each other, and the lower-row balls (33) of each ball module (3a) are disposed between each first arcuate bent portion (123) and each abutting slope (223) which are corresponsive to each other.

8. The automotive seat rail according to claim 1, further comprising a control lever (900), and a sheath (9) disposed at an end of the control lever (900), and the control lever (900) using the sheath (9) to elastically drive the stress section (424) of the engaging member (42).

9. The automotive seat rail according to claim 8, wherein the sheath (9) is made of an elastic colloid and has a sheath hole (91) formed thereon, and the stress section (424) is a lug extending into the sheath hole (91) and driven by the sheath (9).

10. The automotive seat rail according to claim 1, wherein the engaging structure (400) further comprises a first pivot (44) pivotally coupled between the fixing frame (41) and the engaging member (42), and the first elastic member (43) is movably sheathed on the first pivot (44).

11. The automotive seat rail according to claim 1, further comprising an actuating structure (500) and a control lever (900); the actuating structure (500) comprising: a base plate (5), an actuating frame (6) and a second elastic member (8), and the base plate (5) being fixed to the inner rail (2), the actuating frame (6) being pivotally coupled to the base plate (5) and having a limit space (64) and a driving portion (614), and the driving portion (614) being mounted onto the stress section (424) of the engaging member (42) in a surrounding manner, and the second elastic member (8) being elastically supported between the actuating frame (6) and the base plate (5); the control lever (900) having a control end (94) plugged into and limited by the limit space (64), and the control lever (900) controlling the actuating frame (6) to drive the engaging member (42) to release the engagement.

12. The automotive seat rail according to claim 11, wherein the actuating structure (500) further comprises a second pivot (7) fixed to the base plate (5), and a portion between the limit space (64) of the actuating frame (6) and the driving portion (614) is movably pivoted to the second pivot (7), and the second elastic member (42) is sheathed on the second pivot (7).

13. The automotive seat rail according to claim 11, wherein the actuating frame (6) further comprises a frame body (61), and a first protrusion (62) and a second protrusion (63) arranged with an interval apart from each other and extended from two opposite sides of the frame body (61) respectively, and the limit space (64) is formed between the frame body (61), the first protrusion (62) and the second protrusion (63).

14. The automotive seat rail according to claim 13, wherein the control end (94) and the actuating frame (6) disposed at the corresponding positions of the limit space (64) are pivotally coupled to the base plate (5), so that the control end (94) can be rotated with respect to the actuating frame (6), and the first protrusion (62) and the second protrusion (63) block the rotating direction of the control end (94), and the first protrusion (62) and the second protrusion (63) have a first notch (621) and a second notch (631) formed thereon respectively, and the control end (94) is rotated to a position corresponding to the first notch (621) and the second notch (631).

15. The automotive seat rail according to claim 11, wherein the actuating frame (6) and the base plate (5) have an opening (612) and an insert hole (52) formed thereon respectively and configured to be corresponsive to each other, and an end of the second elastic member (8) is passed through the opening and plugged into the insert hole (52), and the other end of the second elastic member (42) is plugged into the actuating frame (6).
